# EUROPEAN PATENT APPLICATION

(11) **EP 4 401 504 A1**
(43) Date of publication of application: **17.07.2024**
(21) Application number: 22867225.9
(22) Date of filing: 26.08.2022
(51) Int. Cl.: H04W 76/15, H04W 84/12, H04W 28/06

(54) **COMMUNICATION DEVICE, COMMUNICATION METHOD, AND PROGRAM**

(30) Priority: 08.09.2021 JP 2021146412
(71) Applicant: CANON KABUSHIKI KAISHA, Tokyo 146-8501 (JP)
(72) Inventor: YOSHIKAWA Yuki, Tokyo 146-8501 (JP)
(74) Representative: Canon Europe Limited
(86) International application number: PCT/JP2022/032163
(87) International publication number: WO 2023/037903

(57) **Abstract**

In a state in which a communication apparatus capable of establishing connections with another communication apparatus via a plurality of links and the other communication apparatus have established a connection over a first link, a frame including first information regarding establishment of a second link and second information regarding TID (Traffic Identifier) setting is transmitted to the other communication apparatus, the second link is established on the basis of the first information, and a TID for the first link or the second link is set on the basis of the second information.

## Description

### Technical Field

The present invention relates to a communication apparatus that performs wireless communication.

### Background Art

With the recent increase in the amount of communicated data, communication technology for, for example, wireless LANs (Local Area Networks) is being developed. As major communication standards for wireless LANs, IEEE (Institute of Electrical and Electronics Engineers) 802.11 standard series are known. The IEEE802.11 standard series include the IEEE802.11a/b/g/n/ac/ax standards. For example, in the latest standard IEEE802.11ax, OFDMA (Orthogonal Frequency Division Multiple Access) is used to standardize a technology for attaining a high peak throughput of 9.6 gigabits per second (Gbps) at the maximum and increasing the communication rate in a congestion situation (see PTL 1). OFDMA stands for Orthogonal Frequency-Division Multiple Access.

As a succeeding standard aiming at a further increase in throughput and frequency use efficiency and further improvement in communication latency, a task group called IEEE802.11be has been launched.

In the IEEE802.11be, multi-link communication is being studied in which one AP establishes a plurality of links with one STA (station) by using frequency bands of, for example, 2.4 GHz, 5 GHz, and 6 GHz to perform simultaneous communication.

### Citation List

### Patent Literature

PTL 1: Japanese Patent Laid-Open No. 2018-50133

### Summary of Invention

### Technical Problem

In multi-link communication that is under study for adoption in 11be, it is being studied that each of the links to be established is assigned a TID, which is an identifier indicating the priority of data.

However, in order to establish a second link in a state in which a first link has been established, when a first frame is transmitted to thereby establish the second link and a second frame is used to perform TID setting for the second link, overhead may increase.

An object of the present invention is to reduce overhead in multi-link communication.

### Solution to Problem

A communication apparatus capable of establishing connections with another communication apparatus via a plurality of links, including: transmitting means for transmitting, in a state in which the communication apparatus and the other communication apparatus have established a connection over a first link, a frame including first information regarding establishment of a second link and second information regarding TID (Traffic Identifier) setting to the other communication apparatus;
establishing means for establishing the second link on the basis of the first information transmitted by the transmitting means; and
setting means for setting a TID for the first link or the second link on the basis of the second information transmitted by the transmitting means.

### Advantageous Effects of Invention

According to the present invention, overhead in multi-link communication can be reduced.

### Brief Description of Drawings

[Fig. 1] Fig. 1 is a diagram illustrating a configuration of a network in the present invention.
[Fig. 2] Fig. 2 is a diagram illustrating a hardware configuration of a communication apparatus in the present invention.
[Fig. 3] Fig. 3 is a diagram illustrating a functional configuration of the communication apparatus in the present invention.
[Fig. 4] Fig. 4 is a diagram illustrating an overview of multi-link communication.
[Fig. 5] Fig. 5 is a diagram illustrating a frame format in the present invention.
[Fig. 6A] Fig. 6A is a diagram illustrating a frame format in the present invention.
[Fig. 6B] Fig. 6B is a diagram illustrating a frame format in the present invention.
[Fig. 6C] Fig. 6C is a diagram illustrating a frame format in the present invention.
[Fig. 6D] Fig. 6D is a diagram illustrating a frame format in the present invention.
[Fig. 7] Fig. 7 is a table showing EHT Action Values in the present invention.
[Fig. 8] Fig. 8 is a diagram illustrating a frame format in the present invention.
[Fig. 9] Fig. 9 is a sequence chart illustrating link establishment in the present invention.
[Fig. 10] Fig. 10 is a flowchart illustrating link establishment and TID setting by using frame formats in the present invention.
[Fig. 11] Fig. 11 is a flowchart illustrating link establishment and TID setting by using frame formats in the present invention.

### Description of Embodiments

Hereinafter, an embodiment of the present invention will be described in detail with reference to the attached drawings. Note that a configuration illustrated in the following embodiment is only an example, and the present invention is not limited to the illustrated configuration.

### (Configuration of Wireless Communication System)

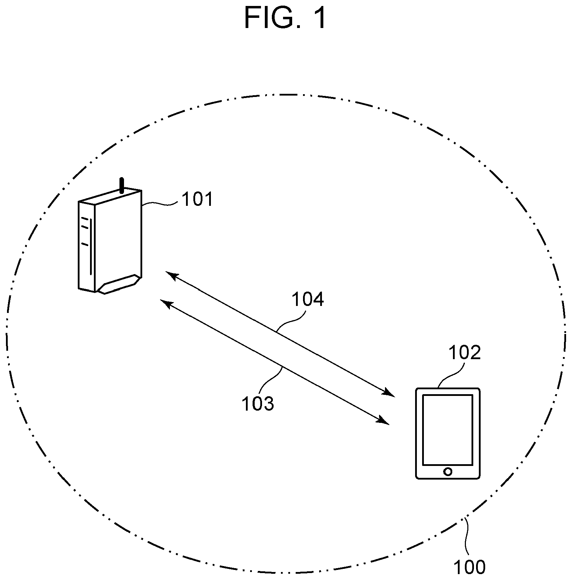

Fig. 1 illustrates a configuration of a network that a communication apparatus 101 (hereinafter referred to as "non-AP MLD 101") according to this embodiment searches. A communication apparatus 102 (hereinafter referred to as "AP-MLD 102) is an access point (AP) having a role in building a wireless network 100. The AP MLD 102 can communicate with the non-AP MLD 101. This embodiment is applied to the non-AP MLD 101 and the AP MLD 102.

Each of the non-AP MLD 101 and the AP MLD 102 can perform wireless communication conforming to the IEEE802.11be (EHT) standard. IEEE stands for Institute of Electrical and Electronics Engineers. The non-AP MLD 101 and the AP MLD 102 can communicate at frequencies in the 2.4 Hz band, the 5 GHz band, and the 6 GHz band. Frequency bands used by each communication apparatus are not limited to these bands, and a different frequency band, such as the 60 GHz band, may be used. The non-AP MLD 101 and the AP MLD 102 can communicate by using bandwidths of 20 MHz, 40 MHz, 80 MHz, 160 MHz, and 320 MHz. Bandwidths used by each communication apparatus are not limited to these bandwidths, and different bandwidths of, for example, 240 MHz and 4 MHz may be used.

When the non-AP MLD 101 and the AP MLD 102 perform OFDMA communication conforming to the IEEE802.11be standard, multi-user (MU) communication in which signals of a plurality of users are multiplexed can be implemented. OFDMA stands for Orthogonal Frequency Division Multiple Access (Go-Straight Frequency Division Multiple Access). In OFDMA communication, some of divided frequency bands (RUs: Resource Units) are assigned to respective STAs so as not to overlap each other and carrier waves of the respective STAs go straight. Therefore, an AP can communicate with a plurality of STAs in parallel in a specified bandwidth.

It is generally known that a radio wave travels over a distance, which differs depending on its frequency, and a radio wave having a lower frequency is diffracted to a larger degree and travels over a longer distance while a radio wave having a higher frequency is diffracted to a smaller degree and travels over a shorter distance. Even when an obstacle is present on the way, a radio wave having a low frequency goes around the obstacle and travels but a radio wave having a high frequency is less likely to go around the obstacle because of its high straightness and might not travel farther. A frequency of 2.4 GHz is often used by other devices, and microwaves are known to emit radio waves in the same frequency band. As described above, even a radio wave emitted by the same device can vary in the strength of the traveling radio wave or in the SN (Signal/Noise) ratio because of its frequency band, depending on the location where the device is placed and the environment.

Although it is assumed that the non-AP MLD 101 and the AP MLD 102 support the IEEE802.11be standard, the MLDs may additionally support a legacy standard preceding the IEEE802.11be standard. Specifically, the non-AP MLD 101 and the AP MLD 102 may support at least any one of the IEEE802.11a/b/g/n/ac/ax standards. Furthermore, the non-AP MLD 101 and the AP MLD 102 may support other communication standards, such as Bluetooth (registered trademark), NFC, UWB, ZigBee, and MBOA, in addition to the IEEE802.11 series standards. UWB stands for Ultra Wide Band and MBOA stands for Multi Band OFDM Alliance. NFC stands for Near Field Communication. UWB includes Wireless USB, Wireless 1394, and WiNET. The non-AP MLD 101 and the AP MLD 102 may support communication standards of wired communication over, for example, wired LANs. Specific examples of the AP MLD 102 include a wireless LAN router and a personal computer (PC) but are not limited to these. The AP MLD 102 may be an information processing apparatus, such as a wireless chip, that can perform wireless communication conforming to the IEEE802.11be standard. Specific examples of the non-AP MLD 101 include a camera, a tablet, a smartphone, a PC, a mobile phone, a video camera, and a headset but are not limited to these. The non-AP MLD 101 may be an information processing apparatus, such as a wireless chip, that can perform wireless communication conforming to the IEEE802.11be standard.

Each communication apparatus can communicate by using bandwidths of 20 MHz, 40 MHz, 80 MHz, 160 MHz, and 320 MHz.

The non-AP MLD 101 and the AP MLD 102 establish links via a plurality of frequency channels and perform multi-link communication for communication. In the IEEE802.11 series standards, the bandwidth of each frequency channel is defined as 20 MHz. Here, the frequency channel is a frequency channel defined in the IEEE802.11 series standards, and a plurality of frequency channels are defined for each of the frequency bands, namely, the 2.4 GHz band, the 5 GHz band, the 6 GHz band, and the 60 GHz band in the IEEE802.11 series standards.

Note that bonding with an adjacent frequency channel may be performed to thereby use a bandwidth of 40 MHz or more in one frequency channel. For example, the AP MLD 102 has a capability of establishing a link with the non-AP MLD 101 via a first frequency channel in the 2.4 GHz band and communicating. In parallel, the non-AP MLD 101 has a capability of establishing a link with the AP MLD 102 via a second frequency channel in the 5 GHz band and communicating. In this case, the non-AP MLD 101 performs multi-link communication in which the non-AP MLD 101 maintains the second link via the second frequency channel in parallel to the link via the first frequency channel. As described above, when the AP MLD 102 establishes links via a plurality of frequency channels with the non-AP MLD 101, throughput in communication with the non-AP MLD 101 can be increased.

Note that in multi-link communication, a plurality of links in different frequency bands may be established as links between communication devices. For example, the non-AP MLD 101 may be allowed to be established a link in each of the 2.4 GHz band, the 5 GHz band, and the 6 GHz band. Alternatively, links may be allowed to be established via a plurality of different channels included in the same frequency band. For example, a link of 6ch in the 2.4 GHz band may be allowed to be established as a first link, and a link of 1ch in the 2.4 GHz band may be allowed to be established as a second link. Note that links in the same frequency band and a link in a different frequency band may coexist. For example, the non-AP MLD 101 may be allowed to establish, in addition to the first link of 6ch in the 2.4 GHz band, the link of 1ch in the 2.4 GHz band and a link of 149ch in the 5 GHz band. The non-AP MLD 101 and an AP establish a plurality of connections at different frequencies, and therefore, even when a certain band is congested, communication with the non-AP MLD 101 can be established in the other band. This can prevent a drop in throughput in communication with the non-AP MLD 101 and delays in communication.

Although the wireless network illustrated in Fig. 1 includes one AP MLD and one non-AP MLD, the number and placement of AP MLDs and non-AP MLDs are not limited to this. For example, one non-AP MLD may be added to the wireless network illustrated in Fig. 1. In this case, any number of links may be established, each of the links may be in any frequency band, and any frequency width may be employed.

When performing multi-link communication, the AP MLD 102 and the non-AP MLD 101 transmit and receive data to and from each other via a plurality of links.

Furthermore, the AP MLD 102 and the non-AP MLD 101 may be capable of performing MIMO (Multiple-Input And Multiple-Output) communication. In this case, each of the AP MLD 102 and the non-AP MLD 101 has a plurality of antennas, and one of the MLDs sends different signals from the respective antennas by using the same frequency channel. The receiving end simultaneously receives all signals arriving through a plurality of streams by using the plurality of antennas, separates signals in the respective streams, and decodes the signals. When MIMO communication is thus performed, the AP MLD 102 and the non-AP MLD 101 can communicate more data in the same period of time than in a case where MIMO communication is not performed. When performing multi-link communication, the AP MLD 102 and the non-AP MLD 101 may perform MIMO communication over some links.

### (Configuration of AP MLD and Non-AP MLD)

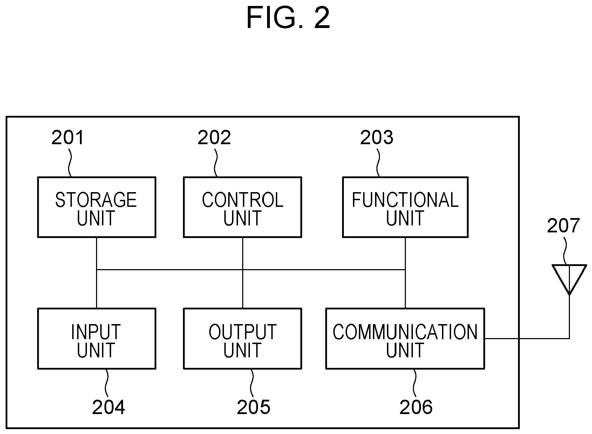

Fig. 2 illustrates an example hardware configuration of the non-AP MLD 101 in this embodiment. The non-AP MLD 101 includes a storage unit 201, a control unit 202, a functional unit 203, an input unit 204, an output unit 205, a communication unit 206, and an antenna 207. Note that a plurality of antennas may be included.

The storage unit 201 is constituted by one or more memories, such as a ROM and a RAM, and stores a computer program for performing various operations described below and various types of information including communication parameters for wireless communication. ROM stands for Read Only Memory and RAM stands for Random Access Memory. As the storage unit 201, in addition to the memories, such as the ROM and the RAM, a storage medium, such as a flexible disk, a hard disk, an optical disc, a magneto-optical disk, a CD-ROM, a CD-R, a magnetic tape, a nonvolatile memory card, or a DVD, may be used. The storage unit 201 may include a plurality of memories.

The control unit 202 is constituted by, for example, one or more processors, such as a CPU and an MPU, and performs the computer program stored in the storage unit 201 to thereby control the non-AP MLD 101 in whole. Note that the control unit 202 may control the non-AP MLD 101 in whole by cooperation between the computer program stored in the storage unit 201 and the OS (Operating System). The control unit 202 generates data and signals (radio frames) to be transmitted in communication with another communication apparatus.

CPU stands for Central Processing Unit and MPU stands for Micro Processing Unit. The control unit 202 may be, for example, a multicore processor including a plurality of processors, and the plurality of processors may control the non-AP MLD 101 in whole.

The control unit 202 controls the functional unit 203 to perform wireless communication and a predetermined process, such as image capturing, printing, or projection. The functional unit 203 is hardware for the non-AP MLD 101 to perform the predetermined process.

The input unit 204 accepts various operations performed by a user. The output unit 205 performs various types of output for the user through a monitor screen or a speaker. Here, output by the output unit 205 may be, for example, display on the monitor screen, audio output by the speaker, or output with vibration. Note that the input unit 204 and the output unit 205 may be implemented as one module, such as a touch panel. Each of the input unit 204 and the output unit 205 may be integrated with or separated from the non-AP MLD 101.

The communication unit 206 controls wireless communication conforming to the IEEE802.11be standard. The communication unit 206 may control wireless communication conforming to other IEEE802.11 series standards in addition to the IEEE802.11be standard or control wired communication over, for example, a wired LAN. The communication unit 206 controls the antenna 207 to transmit and receive signals for wireless communication generated by the control unit 202.

Note that when the non-AP MLD 101 supports, for example, the NFC standard and the Bluetooth standard in addition to the IEEE802.11be standard, the communication unit 206 may control wireless communication conforming to these communication standards. When the non-AP MLD 101 is capable of performing wireless communication conforming to a plurality of communication standards, the non-AP MLD 101 may have a configuration including separate communication units and separate antennas supporting the respective communication standards. The non-AP MLD 101 communicates data including image data, document data, and video data to the non-AP MLD 101 via the communication unit 206.

The antenna 207 may be separated from the communication unit 206 or may be integrated with the communication unit 206 as one module.

The antenna 207 is an antenna capable of communicating in the 2.4 GHz band, the 5 GHz band, and the 6 GHz band. Although this embodiment assumes that the non-AP MLD 101 includes one antenna, the non-AP MLD 101 may include three antennas. The non-AP MLD 101 may include different antennas for respective frequency bands. When the non-AP MLD 101 includes a plurality of antennas, the non-AP MLD 101 may include the communication units 206 corresponding to the respective antennas.

Note that the AP MLD 102 has a hardware configuration similar to that of the non-AP MLD 101.

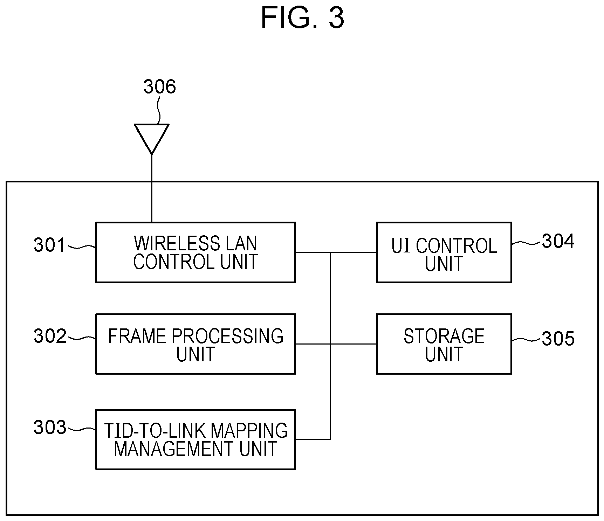

Fig. 3 is a block diagram illustrating a functional configuration of the non-AP MLD 101 in this embodiment. Note that the AP MLD 102 has a similar configuration. It is assumed here that the non-AP MLD 101 includes a wireless LAN control unit 301. The number of wireless LAN control units is not limited to one and may be two or three or more. The non-AP MLD 101 further includes a frame processing unit 302, a TID-To-Link Mapping management unit 303, a UI control unit 304, a storage unit 305, and a radio antenna 306.

The wireless LAN control unit 301 includes an antenna and a circuit for transmitting and receiving radio signals to and from another wireless LAN apparatus and a program for controlling the antenna and the circuit. The wireless LAN control unit 301 performs communication control for a wireless LAN in accordance with the IEEE802.11 standard series on the basis of frames generated by the frame generation unit 302.

The frame processing unit 302 processes wireless control frames to be transmitted and received by the wireless LAN control unit 301. Constraints may be imposed on the content of wireless control generated and analyzed by the frame processing unit 302, in accordance with settings saved in the storage unit 305. The content of wireless control may be changed in accordance with user settings from the UI control unit 304. Information of a generated frame is sent to the wireless LAN control unit 301 and transmitted to the apparatus on the other end of communication. Information of a frame received by the wireless LAN control unit 301 is passed to the frame processing unit 302 and analyzed.

The TID-To-Link Mapping management unit 303 manages a link and a TID linked with the link. Here, TID stands for Traffic Identifier. A TID is an identifier used for the purpose of QoS and indicating the priority of data, and eight types of TIDs are present. The eight types include, for example, a TID for transmitting video data and a TID for transmitting voice data, and the eight types of TIDs need to be always assigned to at least one link.

The UI control unit 304 includes hardware related to a user interface, such as a touch panel or a button, for accepting operations for the non-AP MLD performed by a user (not illustrated) of the non-AP MLD, and a program for controlling the hardware. Note that the UI control unit 304 also has a function of for, for example, displaying images and so on or presenting audio output information and so on to the user.

The storage unit 305 is a storage device that can be constituted by, for example, a ROM and a RAM for saving data and a program based on which the non-AP MLD operates.

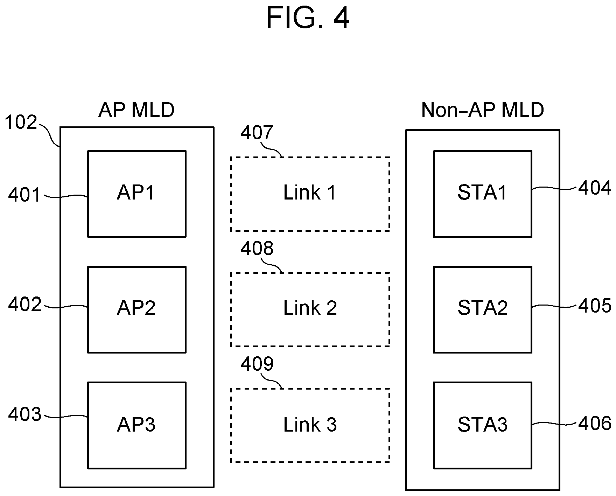

Fig. 4 illustrates configurations of the AP MLD and the non-AP MLD that perform multi-link communication.

A communication apparatus that operates as a multi-link apparatus is called an MLD (Multi Link Device), and one MLD includes a plurality of STAs or a plurality of APs (Access Points) linked with respective links. An MLD having the AP function is called "AP MLD" and an MLD having no AP function is called "non-AP MLD".

In Fig. 4, an AP1 401 and a STA1 404 establish a link 1 407 via a first frequency channel. Similarly, an AP2 408 and a STA2 405 establish a link 2 408 via a second frequency channel, and an AP3 403 and a STA3 406 establish a link 3 409 via a third frequency channel.

Here, the AP MLD and the non-AP MLD establish connections via frequency channels in a sub-GHz band, the 2.4 GHz band, the 3.6 GHz band, the 4.9 and 5 GHz bands, the 60 GHz band, and the 6 GHz band. The AP MLD and the non-AP MLD maintain the connection of the second link via the second frequency channel in parallel to the connection of the first link via the first frequency channel.
The AP MLD and the non-AP MLD may establish a plurality of connections via different frequency channels in the same frequency band instead of connections in different frequency bands.

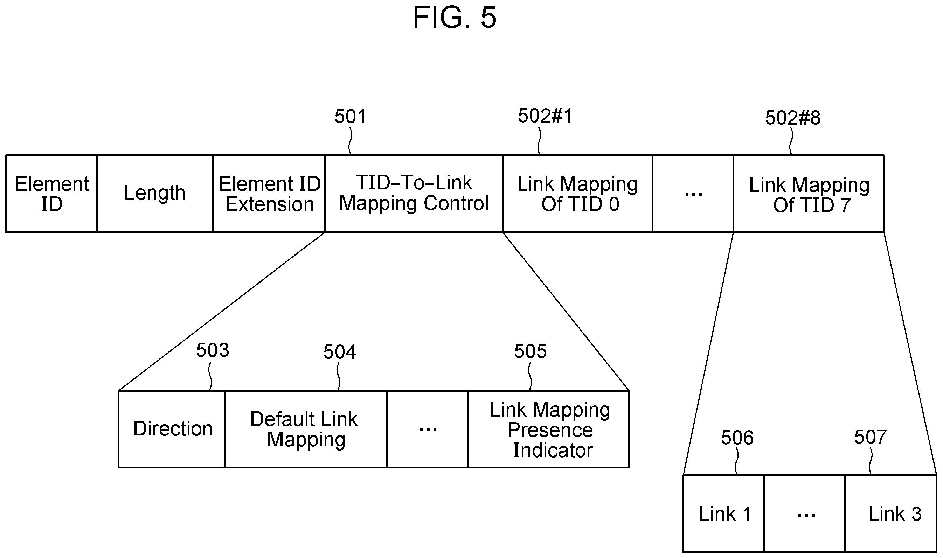

Fig. 5 illustrates an example frame format of a TID-To-Link Mapping element. Although the element illustrated in Fig. 5 is named "TID-To-Link Mapping element" in this embodiment, the name of the element is not limited to this and may be another name. This element is stored in a management frame, such as an Association Request frame, or in an action frame.

The TID-To-Link Mapping element is mainly constituted by TID-To-Link Mapping Control 501 and Link Mapping Of TID 502.

The TID-To-Link Mapping Control 501 is constituted by Direction 503, Default Link Mapping 504, and Link Mapping Presence Indicator 505.

The Direction 503 is a field indicating whether a frame that includes the element is in the UL direction or the DL direction.

The Default Link Mapping 504 is a field indicating that TID assignment is performed in a default mode. The default mode is a mode in which all TIDs are assigned to all links.

The Link Mapping Presence Indicator 505 is a field indicating whether the Link Mapping of TID 502 subsequent to the field 501 is included in the element. When the Link Mapping of TID 502 subsequent to the Direction 503 is not included in the element, the TID-To-Link Mapping Control 501 sets the value of this field 505 to 0.

Each of Link Mapping of TID 502#1 to Link Mapping of TID 502#8 is a field indicating a link to which a corresponding TID is assigned, and the fields are generated as many as the number of TIDs. That is, eight types of TIDs are present as described above, and therefore, eight fields of the Link Mapping of TID 502 can be present. A specific description will be given with reference to the Link Mapping of TID 502#8. For example, in a case where connections have been established over the link 1, the link 2, and the link 3 and where the link 1 and the link 3 are assigned a TID 7, in the Link Mapping of TID502#8, the values of Link 1 506 and Link 3 507 are set to 1, and the value of the other subfield is set to 0.

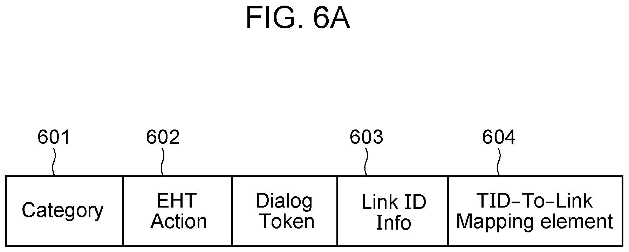

Fig. 6A to Fig. 6D illustrate examples of an Add link Request frame, an Add link Response frame, a Change link Request frame, and a Change link Response, which are action claims.

First, Fig. 6A illustrates an example configuration of an Add link Request frame.

The Add link Request frame is constituted by Category 601, EHT Action 602, Dialog Token, Link ID Info 603, and a TID-To-Link Mapping element 604.

The Category 601 is a field indicating that the Add link Request frame is a Protected EHT action frame.

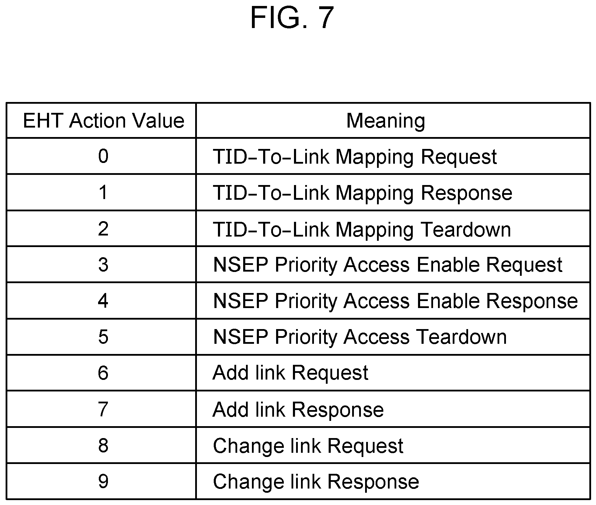

The EHT Action 602 stores the type of action frame and specifically stores an EHT Action Value shown in the table in Fig. 7. As the EHT Action Value, "6" is stored in the field 602 to thereby indicate that the frame is an Add link Request frame. Although this embodiment has indicated the values "6" to "9", the value stored in the field 602 is not limited to these and may be any other value.

The Link ID Info 603 is a field used to establish a link. A link to be added is specified in this field 603. For example, when a request for establishing the link 2 is made in this field in a state in which the AP MLD 101 and the non-AP MLD 102 have established a connection over the link 1, in response to the request being accepted, the AP MLD 101 and the non-AP MLD 102 can establish a connection over the link 2 in addition to the link 1.

The Link ID Info 603 may store information about a plurality of links or the Link ID Info 603 may be provided on a per link basis. For example, when the link 1, the link 2, and the link 3 are to be added, Link ID Info 603#1 for the link 1, Link ID Info 603#2 for the link 2, and Link ID Info 603#3 for the link 3 can be provided. The Link ID Info 603 may include a BSS ID assigned to a link that is requested to be established or the MAC Address or the MLD MAC Address of a transmission source or a transmission destination belonging to the Link ID. Instead of the Link ID Info field, a Multi-link element may be used.

The TID-To-Link Mapping element 604 stores the element illustrated in Fig. 5. Although this embodiment has illustrated an example in which the TID-To-Link Mapping element illustrated in Fig. 5 is stored, this embodiment is not limited to this. For example, at least some of the pieces of information in the TID-To-Link Mapping element illustrated in Fig. 5 need to be included.

The Add link Request frame may include other elements. For example, an HT capabilities element, a BSS Coexistence element, an Extended Capabilities element, a QoS Traffic Capability element, a VHT Capabilities element, and an EHT Capabilities element may be additionally included.

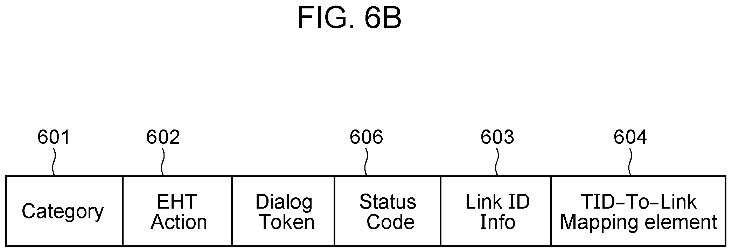

Fig. 6B illustrates an example configuration of an Add link Response frame.

As the EHT Action Value, "7" is stored in the field 602 to thereby indicate that the frame is an Add link Response frame.

The fields 601 and 602 are duplicates of the fields in the Add link Request frame described above, and therefore, a description thereof will be omitted.

In Status Code 606 included in the Add link Response frame, a response to a request indicated by an Add link Request is indicated. For example, when link establishment and requested TID assignment are successful, "SUCCESS" is indicated. For example, when the request for link establishment is successfully accepted but the requested TID assignment is not successfully performed, that is, TID assignment fails, information indicating the results is stored.

The Add link Response frame may include other elements. The elements that can be included are the same as those for the Add link Request frame, and therefore, a description thereof will be omitted.

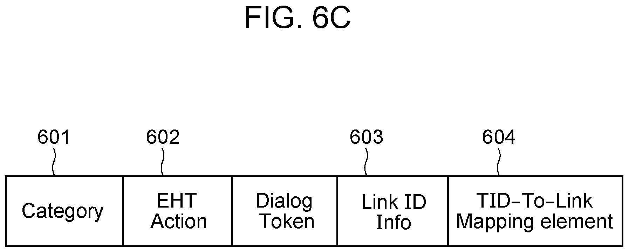

Fig. 6C illustrates an example configuration of a Change link Request frame.

As the EHT Action Value, "8" is stored in the field 602 to thereby indicate that the frame is a Change link Request frame.

The fields 601 and 602 are duplicates of the fields in the Add link Request frame described above, and therefore, a description thereof will be omitted.

In the Link ID Info 603 of the Change link Request frame, all Link IDs after a link change can be included. For example, a case will be considered where in a state in which the AP MLD 101 and the non-AP MLD 102 have established connections via the first link and the second link, the second link is to be changed to the third link while the first link is left unchanged. In this case, in the Link ID Info 603, as a list of links after the change, information about the link 1 and the link 3 is stored. As described above, information about a plurality of links, such as the link 1 and the link 3, may be stored in the Link ID Info 603.

The field may be provided on a per link basis, such as Link ID Info 603#1 for the link 1 and Link ID Info 603#3 for the link 3.

Alternatively, only a Link ID of a link to be changed may be stored in the Link ID Info 603. For example, in a state in which the AP MLD 101 and the non-AP MLD 102 have established connections via the first link and the second link, when the second link is to be changed to the third link while the first link is left unchanged, the second link is to be deleted and the third link is to be added. Therefore, information about the second link and the third link, which are links to be changed, is stored in the Link ID Info 603.

The Change link Request frame may include other elements. The elements that can be included are the same as those for the Add link Request frame, and therefore, a description thereof will be omitted.

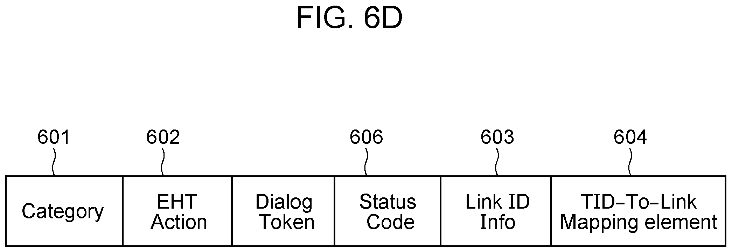

Fig. 6D illustrates an example configuration of a Change link Response frame.

As the EHT Action Value, "9" is stored in the field 602 to thereby indicate that the frame is a Change link Response frame.

The fields 601 and 602 are duplicates of the fields in the Add link Request frame described above, and therefore, a description thereof will be omitted.

In the Status Code of the Change link Response frame, information similar to that in the Status Code 606 of the Add link Response frame can be stored.

The Change link Response frame may include other elements. The elements that can be included are the same as those for the Add link Request frame, and therefore, a description thereof will be omitted.

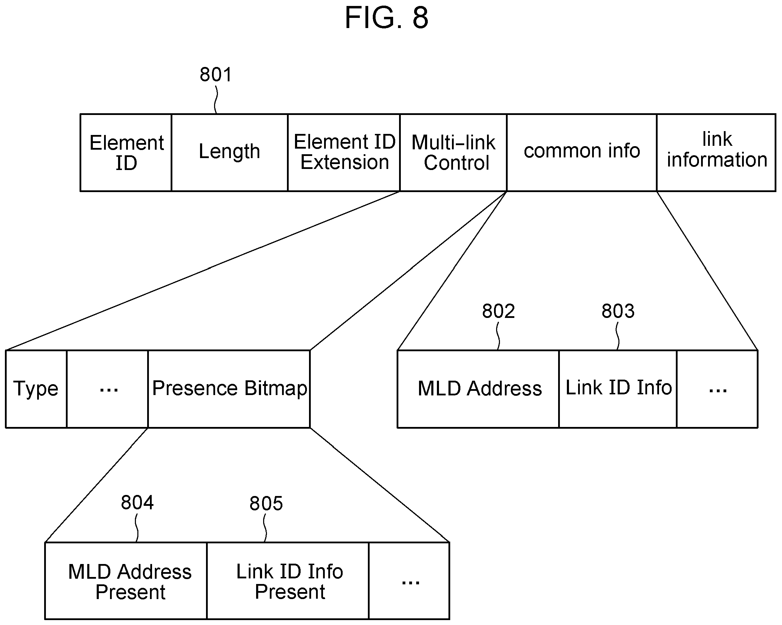

Instead of the Link ID Info 603, a Multi-Link element illustrated in Fig. 8 may be stored.

The Multi-Link element is constituted by Element, Length 801, Element ID Extension, Multi-Link Control, Common info, and Link Information.

The Length 801 is a field indicating a field length.

In the Common info, MLD Address 802 and Link ID Info 803 are included. In the MLD Address 802, the MLD Address of an apparatus that transmits the frame is stored.

The Link ID Info 803 has a configuration similar to that of the Link ID Info 603, and therefore, a description thereof will be omitted.

When the Link ID Info 803 is provided on a per link basis as described above, the presence of the plurality of fields of the Link ID Info 803 can be known from the field length in the Length 801.

MLD Address Present 804 is a field indicating whether the MLD Address 802 included in the Common Info subsequent to the Multi-link Control is included.

Link ID Info Present 805 is a field indicating whether the Link ID Info 803 included in the Common Info subsequent to the Multi-link Control is included.

The Multi-link element itself may be provided on a per link basis, and the plurality of Multi-link elements may be included in the frame.

Although this embodiment has illustrated an example in which the value of any of "6" to "9" is stored in the field 602 as the EHT Action Value, the value stored in the field 602 is not limited to this and may be any other value.

When the Add link Request frame of this embodiment is used, a request for link establishment and a request for TID assignment can be made. When a request for link establishment and a request for TID assignment are made with one frame, the number of frames to be transmitted can be reduced, and overhead in communication can be reduced.

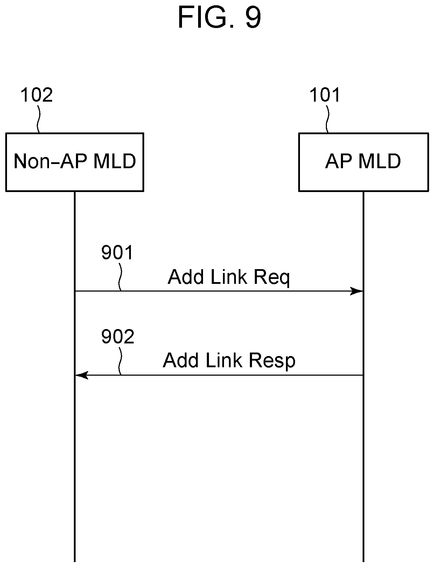

Fig. 9 illustrates an example sequence of negotiations using an Add link Request frame and an Add link Response frame.

In S901, the Non-AP MLD 102 that requests link establishment transmits an Add link Request frame. The Add link Request frame includes information for requesting link establishment and information for requesting TID assignment. With reference to Fig. 6A to Fig. 6D, the information for requesting link establishment is stored in the Link ID Info 603. The information for requesting TID assignment is stored in the TID-To-Link Mapping element 604.

In response to the Add link Request frame being transmitted in S901, the AP MLD 101 receives the frame and determines whether link establishment and TID assignment requested with the Add link Request frame can be accepted. The AP MLD 101 stores information obtained as a result of determination in the Status Code 606 illustrated in Fig. 6A to Fig. 6D and transmits an Add link Response frame in which the information is stored to the non-AP MLD 102.

According to this sequence, when the Add link Request frame is used, a request for link establishment and a request for TID assignment can be made.

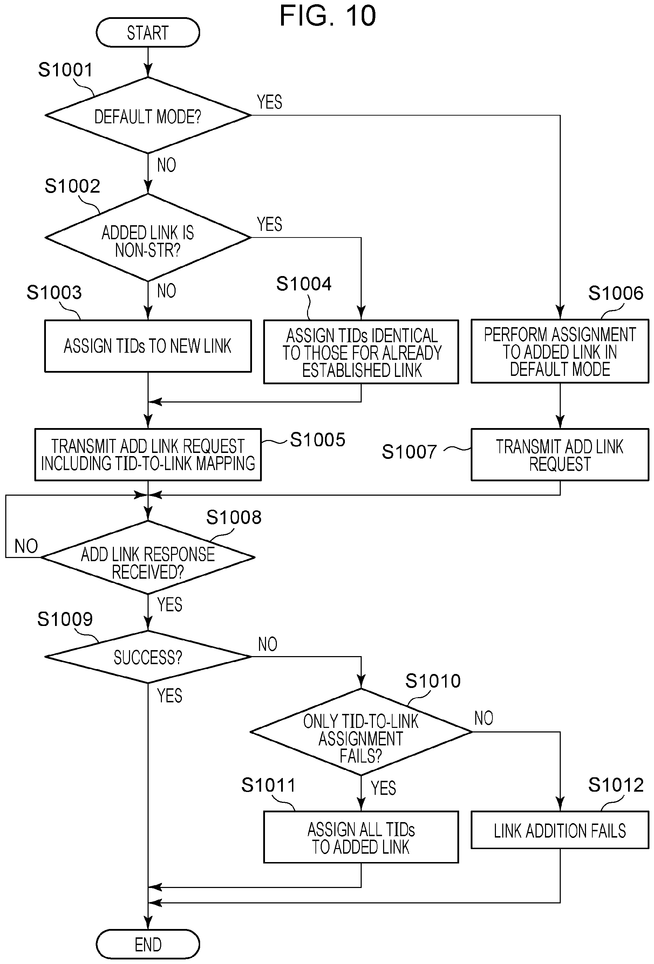

With reference to Fig. 10, a flow of a process for link addition and TID assignment performed by the control unit 202 executing a program stored in the storage unit 201 of the communication apparatus 101, which functions as an AP MLD, or the communication apparatus 102, which functions as a non-AP MLD, will be described.

This flowchart starts in response to a user giving an instruction for link addition. An instruction for link addition may be given from an application instead of a user operation. This flowchart may start in response to a change in a radio wave environment.

In S1001, the control unit 202 determines whether the communication apparatus is operating in a default mode. The default mode is a mode in which all TIDs are assigned to all links. Specifically, the control unit 202 determines whether the communication apparatus is operating in the default mode, with reference to the Default Link Mapping 504 in the TID-To-Link Mapping element in Fig. 5.

If it is determined in S1001 that the communication apparatus is operating in the default mode, the control unit 202 assign all TIDs to a newly added link in S1006. The control unit 202 stores assignment information about the TIDs assigned in S1006 in an Add link Request frame and transmits the frame to the communication apparatus 101 (S1008). Although the Add link Request is transmitted considered in this embodiment, this embodiment is not limited to this. Instead of the Add link Request, a management frame, such as an Associate Request frame or a Probe Request frame, may be transmitted.

If it is determined in S1001 that the communication apparatus is not operating in the default mode, the control unit 202 determines in S1002 whether a set of an already established link and a newly added link can operate as non-STR links. Here, STR stands for Simultaneous Transmit Recieve. A set of links that are not STR links are indicated as non-STR links.

The non-STR links refer to a set of links that are in a state in which data is unable to be received over the second link while data is being transmitted over the first link. Furthermore, the non-STR links refer to a set of links that are in a state in which data is unable to be transmitted over the second link while data is being received over the first link.

If it is determined in S1002 that the set of the already established link and the newly added link can operate as non-STR links, the control unit 202 sets TIDs identical to TIDs set for the already established link, for the newly added link in S1004. If it is determined in S1003 that the set of the already established link and the newly added link is unable to operate as non-STR links, that is, can operate as STR links, the control unit 202 assigns predetermined TIDs to the newly added link in S1003.

The control unit 202 includes information about the TIDs assigned in S1003 or S1004 in a TID-To-Link Mapping element, stores the TID-To-Link Mapping element in an Add link Request, and transmits the Add link Request (S1005).

Next, the control unit 202 determines whether an Add link Response that is a response to the Add link Request transmitted in S1005 or S1007 is received (S1008). If it is determined in S1008 that an Add link Response is received, the control unit 202 determines in S1009 whether TID assignment requested with the Add link Request is successful. Specifically, the control unit 202 determines whether the Status Code in the received Add link Response frame is "success".

If it is determined in S1009 that TID assignment requested with the Add link Request is successful, the flowchart ends.

If it is determined in S1009 that TID assignment requested with the Add link Request is not successful, the control unit 202 determines in S1010 whether only TID assignment fails. If it is determined in S1010 that only TID assignment fails, the control unit 202 assigns all TIDs to the newly added link (S1011), and the flowchart ends. If it is determined in S1010 that other than TID assignment fails, the flowchart ends without link addition.

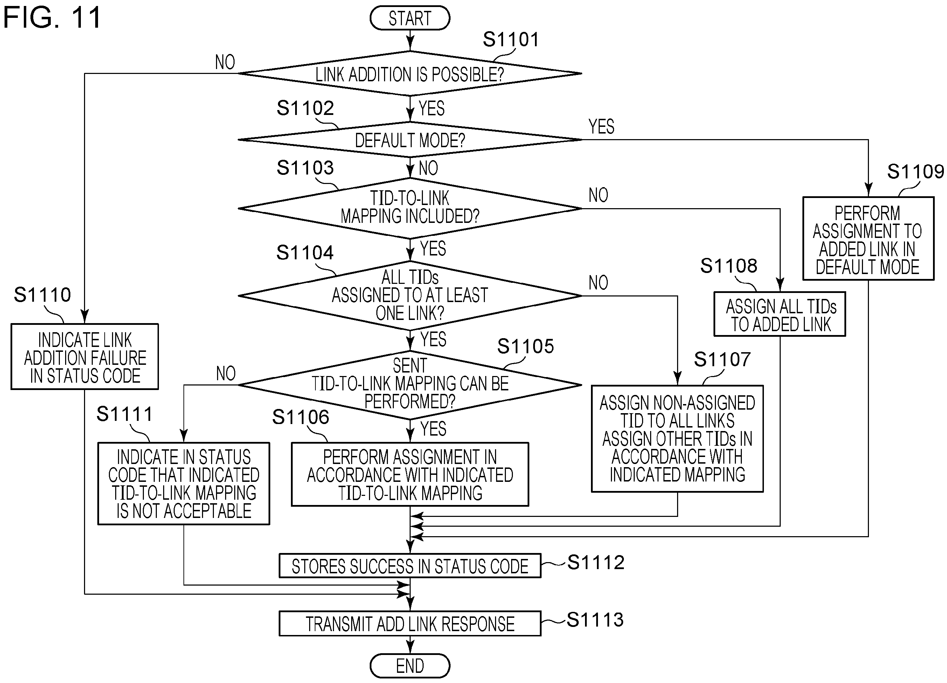

With reference to Fig. 11, a flow of a process for link addition and TID assignment performed by the control unit 202 executing a program stored in the storage unit 201 of the communication apparatus 101, which functions as an AP MLD, or the communication apparatus 102, which functions as a non-AP MLD, will be described.

This flowchart starts in response to reception of an Add link Request.

In S1101, the control unit 202 determines whether link addition is possible. If it is determined in S1101 that link addition is not possible, the control unit 202 indicates the failure in link addition in the Status code of a frame in S1110, and the flowchart ends.

A state in which link addition is not possible can be a case where traffic is high and congestion occurs or a case where the apparatus that receives the Add link request does not form a network over a link that is requested by the apparatus that transmits the Add link request. The state can be a case where the upper limit is set for the number of links established for the apparatus that receives the Add link request.

On the other hand, if it is determined in S1101 that link addition is possible, the control unit 202 determines whether the default mode is set (S1102). If it is determined in S1102 that the communication apparatus is operating in the default mode, the control unit 202 assigns TIDs to a link to be added in the default mode (S1109). That is, the control unit 202 assigns all TIDs to a link to be added.

If it is determined in S1102 that the communication apparatus is not operating in the default mode, the control unit 202 determines whether the received Add link Request frame includes the TID-To-Link mapping element (S1103).

If the TID-To-Link mapping element is not included in the Add link Request frame in S1103, the control unit 202 assigns all TIDs to a link to be added (S1108).

If the TID-To-Link mapping element is included in the Add link Request frame in S1103, the control unit 202 determines in S1104 whether all TIDs are assigned to at least one link.

If it is determined in S1104 that all TIDs are not assigned to at least one link, in S1107, the control unit 202 assigns to all links, a TID that is not assigned. For the other TIDs, the control unit 202 assigns the TIDs in accordance with the TID-To-link mapping element.

If it is determined in S1104 that all TIDs are assigned to at least one link, the control unit 202 determines whether TID assignment indicated in the received Add link Request frame can be performed (S1105). If it is determined in S1105 that assignment can be performed, the control unit 202 stores information SUCCESS in the Status code of an Add link Response frame (S1112). The control unit 202 transmits the Add link Response frame that stores the information to the apparatus on the other end of communication (S1113), and the flowchart ends. If it is determined in S1105 that assignment is unable to be performed, the control unit 202 stores the Status Code indicating that TID assignment requested with the Add link Request is not acceptable (S1111). The control unit 202 transmits the Add link Response frame that stores the information to the apparatus on the other end of communication (S1113), and the flowchart ends.

Instead of the Add link Request frame, an Association Request frame may be transmitted again after link establishment. In this case, an Association Response frame is used instead of the Add link Response frame. Accordingly, the same procedure can be used upon link addition and new link establishment, and this can simplify performing of processes.

Note that a storage medium on which a program code of software that implements the above-described functions is recorded may be supplied to a system or an apparatus, and a computer (CPU or MPU) of the system or the apparatus may read and execute the program code stored in the storage medium. In this case, the program code read from the storage medium implements the functions of the above-described embodiment, and the storage medium that stores the program code constitutes the above-described apparatus.

As the storage medium for supplying the program code, for example, a flexible disk, a hard disk, an optical disc, a magneto-optical disk, a CD-ROM, a CD-R, a magnetic tape, a nonvolatile memory card, a ROM, or a DVD can be used.

Instead of a form in which the above-described functions are implemented by execution of the program code read by the computer, the above-described functions may be implemented by the OS running on the computer performing some or all of the actual processes on the basis of instructions of the program code. OS stands for Operating System.

The program code read from the storage medium is written to a memory included in a functional enhancement board inserted into the computer or a functional enhancement unit connected to the computer. A CPU included in the functional enhancement board or the functional enhancement unit may perform some or all of the actual processes on the basis of instructions of the program code to implement the above-described functions.

The present invention can be implemented as a process in which a program that implements one or more functions of the above-described embodiment is supplied to a system or an apparatus via a network or a storage medium and one or more processors of a computer of the system or the apparatus read and execute the program. The present invention can also be implemented as a circuit (for example, an ASIC) that implements the one or more functions.

The present invention is not limited to the above-described embodiment, and various changes and modifications can be made without departing from the spirit and scope of the present invention. Accordingly, the following claims are appended to disclose the scope of the present invention.

This application claims the benefit of Japanese Patent Application No. 2021-146412 filed September 8, 2021, which is hereby incorporated by reference herein in its entirety.

## Claims

1. A communication apparatus capable of establishing connections with another communication apparatus via a plurality of links, comprising:
transmitting means for transmitting, in a state in which the communication apparatus and the other communication apparatus have established a connection over a first link, a frame including first information regarding establishment of a second link and second information regarding TID (Traffic Identifier) setting to the other communication apparatus;
establishing means for establishing the second link on the basis of the first information transmitted by the transmitting means; and
setting means for setting a TID for the first link or the second link on the basis of the second information transmitted by the transmitting means.

2. The communication apparatus according to Claim 1, wherein the setting means performs control so as to set a TID for the second link without changing a TID set for the first link.

3. The communication apparatus according to Claim 1 or 2, wherein when a TID that is not assigned to the first link or the second link is present, the setting means sets the TID that is not assigned as a TID of the second link.

4. The communication apparatus according to any one of Claims 1 to 3, wherein when only TID setting fails, the setting means performs control so as to set a TID of the second link without changing a TID of the first link.

5. The communication apparatus according to any one of Claims 1 to 4, wherein when transmission and reception on the first link and the second link in parallel are unable to be performed, the setting means sets an identical TID for the first link and the second link.

6. The communication apparatus according to any one of Claims 1 to 5, wherein information regarding a TID of the first link and information regarding a TID of the second link are stored in a TID-To-Link mapping Element of the frame.

7. The communication apparatus according to any one of Claims 1 to 6, wherein the frame is a management frame or an action frame conforming to an IEEE802.11 standard.

8. A communication method for a communication apparatus capable of establishing connections with another communication apparatus via a plurality of links, comprising:
a transmitting step of transmitting, in a state in which the communication apparatus and the other communication apparatus have established a connection over a first link, a frame including first information regarding establishment of a second link and second information regarding TID (Traffic Identifier) setting to the other communication apparatus;
an establishing step of establishing the second link on the basis of the first information transmitted in the transmitting step; and
a setting step of setting a TID for the first link or the second link on the basis of the second information transmitted in the transmitting step.

9. A program for causing a computer to function as the means of the communication apparatus according to any one of Claims 1 to 7.
